(19) Europäisches Patentamt
European Patent Office
Office européen des brevets

(11) **EP 2 279 396 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(21) Anmeldenummer: **09745645.3**

(22) Anmeldetag: **21.04.2009**

(51) Int Cl.:
***G01K 7/42*** *(2006.01)*

(86) Internationale Anmeldenummer:
**PCT/EP2009/054692**

(87) Internationale Veröffentlichungsnummer:
**WO 2009/138312 (19.11.2009 Gazette 2009/47)**

(54) **VERFAHREN UND ANORDNUNG ZUR BESTIMMUNG DER ROTORTEMPERATUR EINES ELEKTROMOTORS EINES HYBRIDFAHRZEUGES**

METHOD AND ARRANGEMENT FOR DETERMINING THE ROTOR TEMPERATURE OF AN ELECTRIC MOTOR OF A HYBRID VEHICLE

PROCEDE ET ENSEMBLE PERMETTANT DE DETERMINER LA TEMPERATURE DE ROTOR D'UN MOTEUR ELECTRIQUE D'UN VEHICULE HYBRIDE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **15.05.2008 DE 102008001807**

(43) Veröffentlichungstag der Anmeldung:
**02.02.2011 Patentblatt 2011/05**

(73) Patentinhaber: **Robert Bosch GmbH**
**70442 Stuttgart (DE)**

(72) Erfinder:
• **PUSHKOLLI, Beqir**
  **71638 Ludwigsburg (DE)**
• **BLIND, Stefan**
  **70736 Fellbach (DE)**
• **RECHBERGER, Klaus**
  **71638 Ludwigsburg (DE)**

(56) Entgegenhaltungen:
WO-A-03/021749          DE-A1- 10 254 295
KR-A- 20030 093 299

**Beschreibung**

Stand der Technik

Die Erfindung betrifft ein Verfahren zur Bestimmung der Rotortemperatur eines Elektromotors eines Hybridfahrzeuges sowie einer Anordnung zur Durchführung des Verfahrens.

Es werden verstärkt Fahrzeuge mit Hybridantrieb entwickelt, bei welchen verschiedene Antriebe für eine Antriebsaufgabe genutzt werden. Dabei können die einzelnen Motoren in dem Hybridantrieb unterschiedlich zusammenarbeiten.

Sie wirken entweder gleichzeitig oder es wirkt nur eine Antriebseinheit auf das zu bewegende Fahrzeug.

Häufig wird der Hybridantrieb in einem Fahrzeug durch einen Verbrennungsmotor und einen Elektromotor gebildet. Die Rotortemperatur des Elektromotors muss dabei ständig überwacht werden, um den Schutz dieser Komponente zu gewährleisten.

Die Messung der Rotortemperatur des Elektromotors mittels eines Temperatursensors ist in der Fahrzeugtechnologie auf Grund einer mangelnden Platzierung eines Temperatursensors bzw. zu hoher Kosten ungeeignet. Daher wird die Rotortemperatur anhand eines Temperaturmodells berechnet, bei welchem die Rotortemperatur von der magnetischen Flussverkettung abhängt. Da bei zu heißem Elektromotor eine Entmagnetisierung der Magneten des Elektromotors und damit eine Änderung des magnetischen Flusses erfolgt, führt dies zu einer falschen Berechnung der Rotortemperatur.

Aus der DE 102 54 295 A1 wird die Läufertemperatur bei permanenterregten Drehfeldmaschinen auf der Grundlage einer aktuellen Leerlaufspannung und einer Referenz-Leerlaufspannung berechnet.

Der Erfindung liegt somit die Aufgabe zugrunde, ein Verfahren und eine Anordnung zur Bestimmung der Rotortemperatur eines Elektromotors eines Hybridfahrzeuges anzugeben, bei welchem eine zuverlässige Bestimmung der Rotortemperatur mit einfachen Mitteln möglich ist.

Offenbarung der Erfindung

Der Vorteil der Erfindung besteht darin, dass die erfindungsgemäße Methode zur Bestimmung der Rotortemperatur unabhängig von den elektrischen Parametern, wie z.B. der magnetischen Flussverkettung des Elektromotors ist. Eine separate Bestimmung der magnetischen Flussverkettung ist nicht notwendig. Solche Flussänderungen, die leider in der Serienfertigung unvermeidlich sind, werden durch das erfindungsgemäße Verfahren indirekt berücksichtigt, indem die Rotortemperatur des Elektromotors über eine Messung eines Betriebsparameters des Elektromotors während des Betriebs des Hybridfahrzeuges ermittelt wird.

Eine besonders einfache Vorgehensweise die tatsächliche Rotortemperatur in Abhängigkeit von den Schwankungen der magnetischen Flussverkettung zuverlässig zu bestimmen, besteht darin, die Rotortemperatur über eine Messung eines Kurzschlussstromes des Elektromotors zu ermittelt. Eine solche Messung ist jederzeit einfach während des Betriebes des Hybridfahrzeuges durchführbar.

Ausgehend von dem gemessenen Kurzschlussstrom wird die Rotortemperatur in Abhängigkeit von einer Umgebungstemperatur berechnet.

In einer Weiterbildung wird nach einem Start einer zweiten Antriebsmaschine des Hybridfahrzeuges, insbesondere eines Verbrennungsmotors, der Elektromotor bis zu einer vorgegebenen Drehzahl hochgefahren, anschließend der Elektromotor kurzgeschlossen und der sich daraus ergebende Kurzschlussstrom gemessen. Ab der vorgegebenen Drehzahl wird der Kurzschlussstrom des Elektromotors als drehzahlunabhängig angenommen. Diese Art der Bestimmung des Kurzschlussstromes ist besonders geeignet für Hybridfahrzeuge im kalten Zustand.

Während der Fahrt eines Hybridfahrzeuges, wenn ein Sollmoment des Elektromotors gleich Null ist, wird der Elektromotor kurzgeschlossen und der Kurzschlussstrom gemessen. Eine solche Situation ergibt sich immer dann, wenn der Verbrennungsmotor den Antrieb des Hybridfahrzeuges allein übernimmt, wie es beispielsweise beim Halten an einer Kreuzung oder Ampel der Fall ist. Da der Kurzschlussstrom in nur wenigen Millisekunden bestimmt wird, wird das Fahrverhalten des Hybridfahrzeuges durch diese Messung in keiner Weise beeinträchtigt und die Rotortemperatur des Elektromotors auch während der Fahrt des Hybridfahrzeuges zuverlässig bestimmt.

Ein besonders konkretes Ergebnis der Rotortemperatur wird erhalten, wenn der während der Fahrt des Hybridfahrzeuges ermittelte Kurzschlussstrom durch den im kalten Zustand des Hybridfahrzeuges ermittelten Kurzschlussstrom dividiert wird.

In einer Ausgestaltung der Erfindung wird eine erste Rotortemperatur des Elektromotors über einen Rechenalgorithmus und die zweite Rotortemperatur des Elektromotors über die Messung des Kurzschlussstromes des Elektromotors bestimmt, wobei die erste und die zweite Rotortemperatur miteinander verglichen werden und bei einem festgestellten Unterschied die erste Rotortemperatur in Abhängigkeit von der zweiten Rotortemperatur korrigiert wird. Anhand dieser Vorgehensweise lassen sich die Unterschiede zwischen der berechneten Rotortemperatur, die kontinuierlich im Steuergerät des Elektromotors erfolgt, und der tatsächlichen Rotortemperatur einfach ermitteln.

Vorteilhafterweise wird bei einem festgestellten Unterschied die erste Rotortemperatur gleich der zweiten Rotortemperatur gesetzt, wodurch sichergestellt ist, dass die Rotortemperatur unabhängig von den elektrischen Parametern des Elektromotors ermittelt wird.

Um die Leistung des Hybridfahrzeuges zu kontrollieren, wird die korrigierte erste Motortemperatur einer weiteren Verarbeitung in mindestens einem Steuergerät des Hybridfahrzeuges zugeführt, welches das Leistungsniveau aller elektrischen Verbraucher im Hybridfahrzeug kontrolliert. Bei einer Überschreitung eines Grenzwertes durch die korrigierte erste Rotortemperatur wird die Leistung mindestens eines elektrischen Verbrauchers des Hybridfahrzeuges reduziert. Dies betrifft in erster Linie Komforteinrichtungen wie Klimaanlage, Bordcomputer, Sitzheizung u. ä.. Durch diese Maßnahme wird das Temperaturgleichgewicht innerhalb des Motorraumes des Hybridfahrzeuges ausgeglichen und eine zusätzliche Wärmezufuhr zum Elektromotor von außen unterbunden.

In einer anderen Weiterbildung der Erfindung weist eine Anordnung zur Bestimmung der Rotortemperatur eines Elektromotors eines Hybridfahrzeuges

Mittel auf, welche eine Rotortemperatur des Elektromotors über eine Messung eines Betriebsparameters des Elektromotors während des Betriebs des Fahrzeuges ermitteln. Diese Anordnung hat den Vorteil, dass die Rotortemperatur unabhängig von den elektrischen Parametern des Elektromotors wie Spannung in Quer- bzw. Längsrichtung, Strom in Quer- und Längsrichtung, Induktivität in Quer- und Längsrichtung oder Statorwiderstand gemessen wird. Auf Temperatursensoren und deren aufwändigen Einbau in den Elektromotor kann verzichtet werden. Weiterhin ist die Messung des elektrischen Betriebsparameters einfach und kostengünstig realisierbar. Eine besonders einfache Realisierung besteht darin, dass ein Steuergerät die Rotortemperatur über die Messung eines Kurzschlussstromes des Elektromotors bestimmt.

Erfindungsgemäß bestimmt das Steuergerät des Elektromotors die erste Rotortemperatur des Elektromotors über einen Rechenalgorithmus und die zweite Rotortemperatur über den Kurzschlussstrom, wobei die erste und die zweite Rotortemperatur miteinander verglichen werden und bei einem festgestellten Unterschied die erste Rotortemperatur in Abhängigkeit von der zweiten Rotortemperatur korrigiert wird und das Steuergerät des Elektromotors zur Weitergabe der korrigierten ersten Rotortemperatur mit mindestens einem Verbrauchersteuergerät des Hybridfahrzeuges verbunden ist.

Die Erfindung lässt zahlreiche Ausführungsbeispiele zu. Eines davon soll an hand der in der Zeichnung dargestellten Figuren näher erläutert werden.

Es zeigt:

Figur 1     Prinzipdarstellung eines Hybridantriebes eines Fahrzeuges

Figur 2     ein Ausführungsbeispiel zur Bestimmung der Rotortemperatur eines Elektromotors in einem Hybridfahrzeug

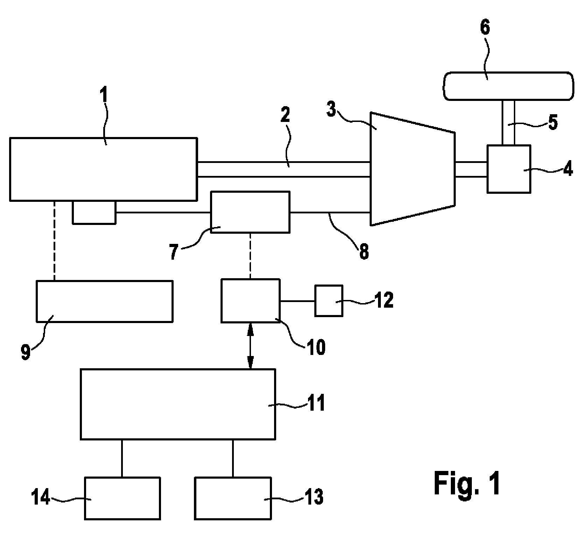

In Figur 1 ist ein Prinzip eines Hybridfahrzeuges dargestellt, welches als erstes Antriebsaggregat einen Verbrennungsmotor 1 aufweist. Der Verbrennungsmotor 1 ist über einen Antriebsstrang 2 mit einem Getriebe 3 verbunden. Das Getriebe 3 wiederum führt auf ein Differential 4, welches über die Fahrzeugachse 5 mit dem Rad 6 verbunden ist, wodurch die vom Verbrennungsmotor 1 aufgebrachte Leistung auf das Rad 6 übertragen wird.

Als zweites Antriebaggregat ist bei dem angegebenen Beispiel ein Elektromotor 7 vorgesehen. Der Elektromotor 7 ist als permanenterregte Synchronmaschine ausgebildet und weist einen eigenen Antriebsstrang 8 auf, über welchen er mit dem Getriebe 3 verbunden ist.

Das Getriebe 3 überträgt die vom Elektromotor 7 bereitgestellte Leistung über das Differential 4 und die Radachse 5 auf das Rad 6.

Die Steuerung und Regelung des Verbrennungsmotors 1 erfolgt dabei über das Motorsteuergerät 9 und die Steuerung und Regelung des Elektromotors 7 über das Elektromotorsteuergerät 10. Das Elektromotorsteuergerät 10 ist mit einem Temperatursensor 12 zur Messung der Umgebungstemperatur und dem Fahrzeugsteuergerät 11 verbunden. Dieses Fahrzeugsteuergerät 11 wiederum steuert das Steuergerät 13 der Klimaanlage und den Bordcomputer 14 an.

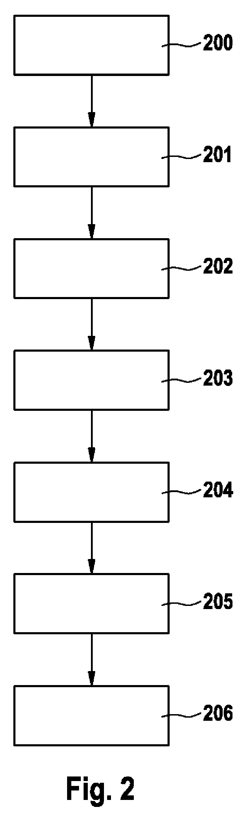

Das Verfahren zur Bestimmung der Rotortemperatur eines Elektromotors soll mit Hilfe von Figur 2 erläutert werden. Im Block 200 wird festgelegt, dass die Rotortemperatur anhand des Kurzschlussstromes des Elektromotors anhand folgender Gleichung bestimmt wird:

$$T_{rot} = (I_k/I_k(@ T_{umg}) - 1)/c_{Tr} + T_{umg} \qquad (1)$$

Dabei bedeuten

| Ik | Kurzschlussstrom |
| --- | --- |
| Ik(@$T_{umg}$) | Kurzschlussstrom im kalten Zustand des Hybridfahrzeuges |
| $T_{umg}$ | Umgebungstemperatur |
| cTr | Temperaturkoeffizient des Magnetmaterials |

Im Block 201 wird zunächst der Kurzschlussstrom Ik(@$T_{umg}$) bestimmt. Dabei befindet sich das Fahrzeug im Stillstand und es wird davon ausgegangen, dass der Verbrennungsmotor 1 und der Elektromotor 7 mehrere Stunden außer Betrieb waren. Ein Maß für den Stillstand des Fahrzeuges ist die so genannte Motor-Abstellzeit, die im Steuergerät 9 des Verbrennungsmotors 1 zur Verfügung steht und welche angibt, nach welchem Zeitraum des Stillstandes Verbrennungsmotor 1 und Elektromotor 7 dieselbe Motortemperatur aufweisen.

Geht man nun davon aus, dass Verbrennungsmotor 1 und Elektromotor 7 eine vorgegebene Zeit außer Betrieb waren, wird das Fahrzeug gestartet und der Elektromotor 7 bis zu einer vorgegebenen Drehzahl hochgefahren. Der Elektromotor 7 wird kurzgeschlossen und der Kurzschlussstrom Ik(@$T_{umg}$) des Elektromotors gemessen.

Im Schritt 202 wird während der weiteren Fahrt des Hybridfahrzeuges der Kurzschlussstrom Ik gemessen. Dies erfolgt, wenn das Sollmoment des Elektromotors 7 gleich Null ist, was beispielsweise beim Halt an einer Ampel der Fall ist. Auch bei dieser Messung wird der Elektromotor 7 über eine bestimmte Drehzahl hochgefahren, damit man davon ausgehen kann, dass eine Drehzahlunabhängigkeit der Rotortemperatur vorliegt. Danach wird der Elektromotor 7 kurzgeschlossen, was einfach über einen nicht weiter dargestellten Shuntwiderstand erfolgt, und der Kurzschlussstrom Ik gemessen.

Die gemessenen Kurzschlussströme Ik und Ik(@$T_{umg}$) werden im Block 203 in die Gleichung (1) eingesetzt und die Rotortemperatur in Abhängigkeit vom Kurzschlussstrom im Steuergerät 10 des Elektromotors 7 berechnet. Dabei wird die notwendige Umgebungstemperatur mit Hilfe des Temperatursensors 12 bestimmt.

Im Block 204 wird die Rotortemperatur Tr über das Temperaturmodell nach folgender Gleichung berechnet:

$$Tr = [PsiE/PsiE20 - 1]/ cTr + 20°C \qquad (2),$$

wobei

Tr die Rotortemperatur
PsiE magnetische Flussverkettung
PsiE20 magnetische Flussverkettung bei 20 °C
cTr Temperaturkoeffizient des Magnetmaterials sind.

Im Block 205 wird die mit Gleichung 1 bestimmt Rotortemperatur Trot mit der durch Gleichung 2 bestimmten Rotortemperatur Tr verglichen. Ergeben sich Unterschiede wird im Block 206 die Rotortemperatur Tr korrigiert und gleich Trot gesetzt, wobei der so korrigierte Wert $Tr_k$ an das Fahrzeugsteuergerät 11 ausgegeben wird, welches die Temperatur der Leistungsbauelemente aller Verbraucher im Hybridfahrzeug überwacht.

Überschreitet die ausgegeben Rotortemperatur $Tr_k$ einen vorgegebenen Grenzwert, entscheidet das Fahrzeugsteuergerät 11, welcher der Verbraucher abgeschaltet wird, um das Temperaturniveau im Motorraum auf einem definierten Niveau zu halten. Das Fahrzeugsteuergerät 11 kann dabei beispielsweise den Bordcomputer 14 abschalten.

Zahlreiche durchgeführte Versuche belegen, dass die mit Hilfe des Kurzschlussstromes bestimmte Rotortemperatur immer unter der durch das Temperaturmodell ermittelten Rotortemperatur liegt.

**Patentansprüche**

1. Verfahren zur Bestimmung der Rotortemperatur eines Elektromotors eines Hybridfahrzeuges, wobei die Rotortemperatur (Trot) des Elektromotors (7) über eine Messung eines Betriebsparameters des Elektromotors (7) während des Betriebs des Hybridfahrzeuges ermittelt wird, **dadurch gekennzeichnet, dass** eine erste Rotortemperatur (Tr) des Elektromotors (7) über einen Rechenalgorithmus und eine zweite Rotortemperatur (Trot) über eine Messung eines Kurzschlussstromes (Ik, Ik(@$T_{umg}$)) ermittelt wird, wobei die erste und die zweite Rotortemperatur miteinander verglichen werden und bei einem festgestellten Unterschied die erste Rotortemperatur (Tr) in Abhängigkeit von der zweiten Rotortemperatur (Trot) korrigiert wird.

2. Verfahren nach Anspruch 1, **dadurch gekennzeichnet, dass** die Rotortemperatur (Trot) aus dem gemessenen Kurzschlussstrom (Ik, Ik(@$T_{umg}$) in Abhängigkeit von einer Umgebungstemperatur ($T_{umg}$) berechnet wird.

**3.** Verfahren nach Anspruch 1, **dadurch gekennzeichnet, dass** nach einem Start einer zweiten Antriebsmaschine (1) des Hybridfahrzeuges, insbesondere eines Verbrennungsmotors, der Elektromotor (7) bis zu einer vorgegebenen Drehzahl hochgefahren wird, anschließend der Elektromotor (7) kurzgeschlossen wird und der sich daraus ergebende Kurzschlussstrom ($Ik(@T_{umg})$) gemessen wird.

**4.** Verfahren nach Anspruch 1, **dadurch gekennzeichnet, dass** während der Fahrt des Hybridfahrzeuges, wenn ein Sollmoment des Elektromotors gleich Null ist, der Elektromotor (7) kurzgeschlossen und der Kurzschlussstrom ($Ik$) gemessen wird.

**5.** Verfahren nach Anspruch 1, **dadurch gekennzeichnet, dass** bei einem festgestellten Unterschied die erste Rotortemperatur ($Tr$) gleich der zweiten Rotortemperatur ($Trot$) gesetzt wird.

**6.** Verfahren nach Anspruch 1 oder 5, **dadurch gekennzeichnet, dass** die korrigierte erste Rotortemperatur ($Tr_k$) einer weiteren Verarbeitung in mindestens einem Steuergerät (11) des Hybridfahrzeuges zugeführt wird.

**7.** Verfahren nach Anspruch 6, **dadurch gekennzeichnet, dass** bei einer Überschreitung eines Grenzwertes durch die korrigierte erste Rotortemperatur ($Tr_k$) die Leistung mindestens eines elektrischen Verbrauchers (13, 14) des Hybridfahrzeuges reduziert wird.

**8.** Anordnung zur Bestimmung der Rotortemperatur eines Elektromotors eines Hybridfahrzeuges, gemäß dem Verfahren nach einem der Ansprüche 1 bis 7, wobei Mittel (10) vorhanden sind, welche die Rotortemperatur ($Trot$) des Elektromotors (7) über eine Messung eines Betriebsparameters des Elektromotors (7) während des Betriebs des Hybridfahrzeuges bestimmen, **dadurch gekennzeichnet, dass** ein Steuergerät (10) die Rotortemperatur ($Trot$) über die Messung eines Kurzschlussstromes ($Ik$, $Ik(@T_{umg})$) bestimmt.

**9.** Anordnung nach Anspruch 8, **dadurch gekennzeichnet, dass** das Steuergerät (10) des Elektromotors (7) eine erste Rotortemperatur ($Tr$) des Elektromotors (7) über einen Rechenalgorithmus und die zweite Rotortemperatur ($Trot$) über eine Messung eines Kurzschlussstromes ($Ik$, $Ik(@T_{umg})$) bestimmt, wobei die erste und die zweite Rotortemperatur miteinander verglichen werden und bei einem festgestellten Unterschied die erste Rotortemperatur ($Tr$) in Abhängigkeit von der zweiten Rotortemperatur ($Trot$) korrigiert wird und das Steuergerät (10) zur Weitergabe der korrigierten ersten Rotortemperatur ($Tr_k$) mit mindestens einem Verbrauchersteuergerät (11, 13, 14) des Hybridfahrzeuges verbunden ist.

**Claims**

**1.** Method for determining the rotor temperature of an electric motor of a hybrid vehicle, wherein the rotor temperature ($Trot$) of the electric motor (7) is obtained by measuring an operating parameter of the electric motor (7) while the hybrid vehicle is operating, **characterized in that** a first rotor temperature ($Tr$) of the electric motor (7) is obtained by means of a calculation algorithm, and a second rotor temperature ($Trot$) is obtained by measuring a short-circuit current ($Ik$, $Ik(@T_{umg})$), wherein the first and second rotor temperatures are compared with one another, and when a difference is detected the first rotor temperature ($Tr$) is corrected as a function of the second rotor temperature ($Trot$).

**2.** Method according to Claim 1, **characterized in that** the rotor temperature ($Trot$) is calculated from the measured short-circuit current ($Ik$, $Ik(@T_{umg})$) as a function of an ambient temperature ($T_{umg}$).

**3.** Method according to Claim 1, **characterized in that** after a start of a second drive machine (1) of the hybrid vehicle, in particular an internal combustion engine, the electric motor (7) is revved up to a predefined rotational speed, the electric motor (7) is subsequently short-circuited, and the resulting short-circuit current ($Ik(@T_{umg})$) is measured.

**4.** Method according to Claim 1, **characterized in that** during the travel of the hybrid vehicle, the electric motor (7) is short-circuited and the short-circuit current ($Ik$) is measured if a setpoint torque of the electric motor is equal to zero.

**5.** Method according to Claim 1, **characterized in that** when a difference is detected, the first rotor temperature ($Tr$) is made equal to the second rotor temperature ($Trot$).

**6.** Method according to Claim 1 or 5, **characterized in that** the corrected first rotor temperature ($Tr_k$) is fed to further processing in at least one control unit (11) of the hybrid vehicle.

7. Method according to Claim 6, **characterized in that** when a limiting value is exceeded by the corrected first rotor temperature (Tr$_k$) the power of at least one electrical consumer (13, 14) of the hybrid vehicle is reduced.

8. Arrangement for determining the rotor temperature of an electric motor of a hybrid vehicle in accordance with the method according to one of Claims 1 to 7, wherein means (10) are present which determine the rotor temperature (Trot) of the electric motor (7) by measuring an operating parameter of the electric motor (7) while the hybrid vehicle is operating, **characterized in that** a control unit (10) determines the rotor temperature (Trot) by measuring a short-circuit current (Ik, Ik(@T$_{umg}$)).

9. Arrangement according to Claim 8, **characterized in that** the control unit (10) of the electric motor (7) determines a first rotor temperature (Tr) of the electric motor (7) by means of a calculation algorithm, and the second rotor temperature (Trot) by measuring a short-circuit current (Ik, Ik(@T$_{umg}$)), wherein the first and second rotor temperature are compared with one another, and when a difference is detected the first rotor temperature (Tr) is corrected as a function of the second rotor temperature (Trot), and the control unit (10) is connected to at least one consumer control unit (11, 13, 14) of the hybrid vehicle in order to pass on the corrected first rotor temperature (Tr$_k$).

**Revendications**

1. Procédé permettant de déterminer la température de rotor d'un moteur électrique d'un véhicule hybride, dans lequel la température de rotor (Trot) du moteur électrique (7) est déterminée par l'intermédiaire d'une mesure d'un paramètre de fonctionnement du moteur électrique (7) pendant le fonctionnement du véhicule hybride, **caractérisé en ce qu'**une première température de rotor (Tr) du moteur électrique (7) est déterminée par l'intermédiaire d'un algorithme de calcul et **en ce qu'**une seconde température de rotor (Trot) est déterminée par l'intermédiaire d'une mesure d'un courant de court-circuit (Ik, Ik(@T$_{umg}$)), dans lequel les première et seconde températures de rotor sont comparées l'une à l'autre et dans lequel la première température de rotor (Tr) est corrigée en fonction de la seconde température de rotor (Trot) lorsqu'il est établi qu'il existe une différence.

2. Procédé selon la revendication 1, **caractérisé en ce que** la température de rotor (Trot) est calculée à partir du courant de court-circuit mesuré (Ik, Ik(@T$_{umg}$)) en fonction d'une température ambiante (T$_{umg}$).

3. Procédé selon la revendication 1, **caractérisé en ce que**, après un démarrage d'une seconde machine d'entraînement (1) du véhicule hybride, notamment d'un moteur à combustion interne, le moteur électrique (7) est mis en fonctionnement jusqu'à une vitesse de rotation prédéterminée puis le moteur électrique (7) est court-circuité et le courant de court-circuit qui en résulte (Ik(@T$_{umg}$) est mesuré.

4. Procédé selon la revendication 1, **caractérisé en ce que**, pendant le déplacement du véhicule hybride, lorsqu'un couple nominal du moteur électrique est égal à zéro, le moteur électrique (7) est court-circuité et le courant de court-circuit (Ik) est mesuré.

5. Procédé selon la revendication 1, **caractérisé en ce que**, lorsqu'il est établi qu'il existe une différence, la première température de rotor (Tr) est réglée à une valeur égale à la seconde température de rotor (Trot).

6. Procédé selon la revendication 1 ou 5, **caractérisé en ce que** la première température de rotor corrigée (Tr$_k$) est soumise à un traitement supplémentaire dans au moins un appareil de commande (11) du véhicule hybride.

7. Procédé selon la revendication 6, **caractérisé en ce que**, lorsque la première température de rotor corrigée (Tr$_k$) dépasse une valeur limite, la puissance d'au moins une charge électrique (13, 14) du véhicule hybride est réduite.

8. Système permettant de déterminer la température de rotor d'un moteur électrique d'un véhicule hybride conformément au procédé selon l'une quelconque des revendications 1 à 7, dans lequel il est prévu des moyens (10) qui déterminent la température de rotor (Trot) du moteur électrique (7) par l'intermédiaire d'une mesure d'un paramètre de fonctionnement du moteur électrique (7) pendant le fonctionnement du véhicule hybride, **caractérisé en ce qu'**un appareil de commande (10) détermine la température de rotor (Trot) par l'intermédiaire de la mesure d'un courant de court-circuit (Ik, Ik(@T$_{umg}$)).

9. Système selon la revendication 8, **caractérisé en ce que** l'appareil de commande (10) du moteur électrique (7) détermine une première température de rotor (Tr) du moteur électrique (7) par l'intermédiaire d'un algorithme de calcul et **en ce que** la seconde température de rotor (Trot) est déterminée par l'intermédiaire d'une mesure d'un courant de court-circuit (Ik, Ik(@$T_{umg}$)), dans lequel les première et seconde températures de rotor sont comparées l'une à l'autre et dans lequel, lorsqu'il est établi qu'il existe une différence, la première température de rotor (Tr) est corrigée en fonction de la seconde température de rotor (Trot) et l'appareil de commande (10) est connecté à au moins un appareil utilisateur (11, 13, 14) du véhicule hybride pour transmettre la première température de rotor corrigée ($Tr_k$).

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10254295 A1